# EUROPEAN PATENT APPLICATION

(11) **EP 2 846 165 A1**
(43) Date of publication of application: **11.03.2015**
(21) Application number: 14183256.8
(22) Date of filing: 02.09.2014
(51) Int. Cl.: G01R 31/40, H01L 31/18

(54) **Method to evaluate the need to perform a reconfiguration step of two or more photovoltaic panels**

(30) Priority: 05.09.2013 IT TO20130718
(71) Applicant: BITRON S.p.A., 10122 Torino (IT)
(72) Inventor: Carotenuto, Pietro Luigi, I-84084 Fisciano (SA) (IT); Managaniello, Patrizio, I-84084 Fisciano (SA) (IT); Petrone, Giovanni, I-84084 Fisciano (SA) (IT); Spagnuolo, Giovanni, I-84084 Fisciano (SA) (IT); Vitelli, Massimo, I-84084 Fisciano (SA) (IT); Cirillo, Luigi, I-10095 Grugliasco (TO) (IT); Cullino, Carlo, I-10095 Grugliasco (TO) (IT)
(74) Representative: Vitillo, Giuseppe

(57) **Abstract**

Method to evaluate the need to perform a reconfiguration step to reconfigure at least two photovoltaic panels (3), which are electrically connected to one another and are comprised in a photovoltaic park (2).

The method comprises the following steps:
• checking whether the time (ΔT) elapsed since the previous reconfiguration step is shorter than a first predetermined time value (ΔT1);
• checking whether a power variation that as absolute value is greater than or equal to a first threshold power variation (ΔPₜₕ₁) is detected, within a first known threshold time amount (ΔTₜₕ);
• checking whether a string current variation (ΔI) and a power variation (ΔP) are concordant in the variation;
if at least one of these steps is checked, it is unnecessary to perform a new reconfiguration step to reconfigure the panels (3).

## Description

The present invention relates to a method to evaluate the need to perform a reconfiguration step to reconfigure the electric connection between two or more photovoltaic panels that are electrically connected to one another so as to form a photovoltaic park, in order to obtain the maximum power production from said panels, even in the presence of dark or shadows, even though partial. Said photovoltaic panels can be connected in series so as to create one or more photovoltaic strings. These strings, when they are provided in a number grater than one, can be connected in parallel so as to form a photovoltaic park. The reconfiguration of the electric connection among the panels is performed in order to find the series-parallel configuration of said panels, with a possible disconnection of some of them, that allows operators to obtain the maximum power from the photovoltaic park, even though one or more panels are shaded, even partially. In case the reconfiguration algorithm re-arranges the panels so as to form one single string, the photovoltaic string coincides with the photovoltaic park.

The method to evaluate the need to perform a reconfiguration step according to the present invention is an adaptive method, the method involving the principle of performing the reconfiguration of the electric connection between said two or more panels only if necessary.

For the purpose of the present invention, the term "adaptive method" indicates a method that is able to identify the need - or lack thereof - to perform a reconfiguration, based on at least one electric indicator, which can reasonably ensure a greater power production. The method according to the present invention allows operators to avoid interrupting the production of energy to perform a reconfiguration of the connection among the panels, with this is not necessary.

The method according to the present invention obtains the information to implement the method - and therefore to decide whether or not it is necessary to perform a reconfiguration of the panels - from the parameters that are normally measured in a photovoltaic park for its management.

Photovoltaic panel reconfiguration algorithms are known, which require specific parameters, measured by means of special additional sensors, to evaluate and/or appraise the need to perform a reconfiguration.

Furthermore, reconfiguration algorithms are known, which, at regular intervals, preform a photovoltaic panel reconfiguration step, even when it is not actually necessary, since the panels are already configured with an interconnection that ensures the maximum power production. This unnecessary reconfiguration leads to a waste of energies and to a temporary interruption of the production of energy by the photovoltaic system.

Reconfiguration methods known from the prior art, which only measure voltages and currents of the photovoltaic strings making up the park, perform the reconfigurations at constant intervals in time, for example every 30 minutes. No method of the prior art provides an indication on when a reconfiguration step is not necessary, namely on when a possible reconfiguration would be superfluous.

The object of the present invention is to solve the technical problems discussed above by implementing an adaptive reconfiguration method, which carries out a reconfiguration of the interconnection of the photovoltaic panels only when it is necessary.

An aspect of the present invention relates to a method to evaluate the need to perform a reconfiguration step having the features set forth in appended claim 1.

A further aspect of the present invention relates to a computer program having the features set forth in appended claim 12.

The accessory features of the method and/or of the computer program are set forth in the appended dependent claims.

The additional features and advantages of the method and of the computer program according to the present invention will be best understood upon perusal of the following explanatory and non-limiting description of the method and computer program with reference to the accompanying drawings, which respectively show what follows:

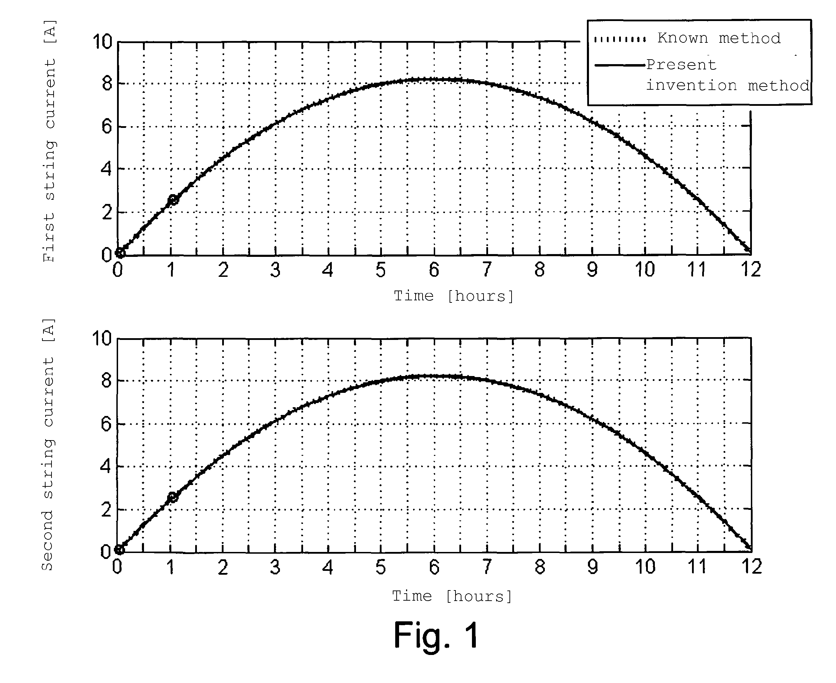

- figure 1 shows a comparison between the curves of the current produced in the daily hours of a day by two strings of a photovoltaic park implementing a method of the prior art and by the same two strings of the same photovoltaic park, or of a substantially similar photovoltaic park, implementing the method according to the present invention, in a condition of complete irradiation of both strings or of total absence of shadow on all the panels;

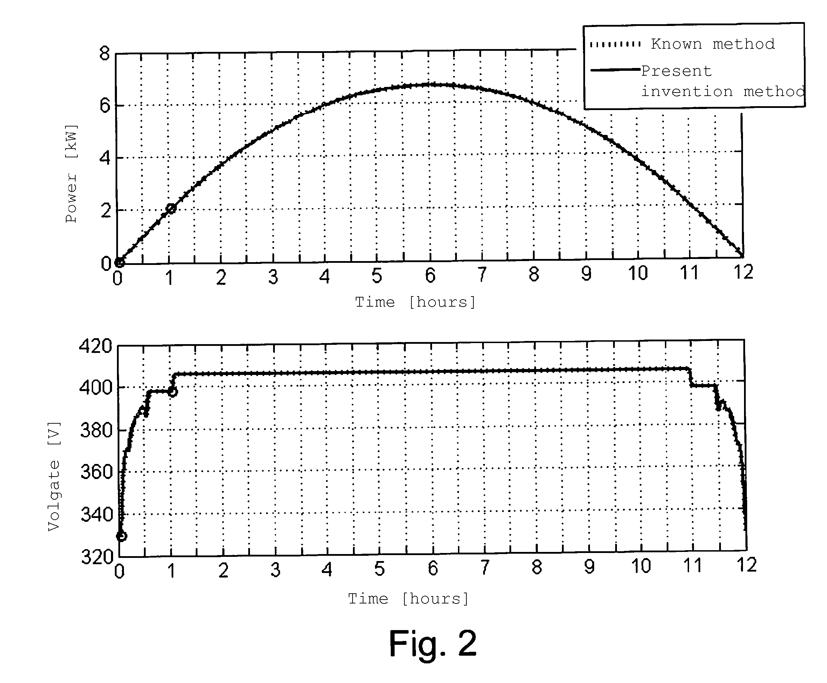

- figure 2 shows a comparison between the curves of the working voltage and the power produced in the daily hours of a day by a photovoltaic park implementing a method of the prior art and by the same photovoltaic park, or by a substantially similar photovoltaic park, implementing the method according to the present invention, in a condition of complete irradiation or of total absence of shadow on all the panels, with reference to figure 1;

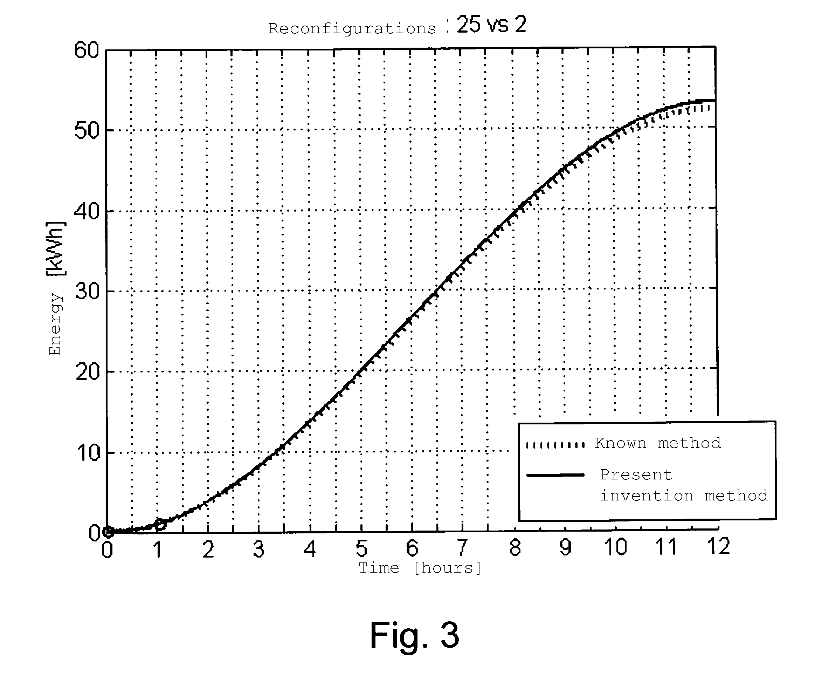

- figure 3 shows a comparison between the curves of the energy produced in the daily hours of a day by a photovoltaic park implementing a method of the prior art and by the same photovoltaic park, or by a substantially similar photovoltaic park, implementing the method according to the present invention, in a condition of complete irradiation or of total absence of shadow on all the panels, with reference to figures 1 and 2;

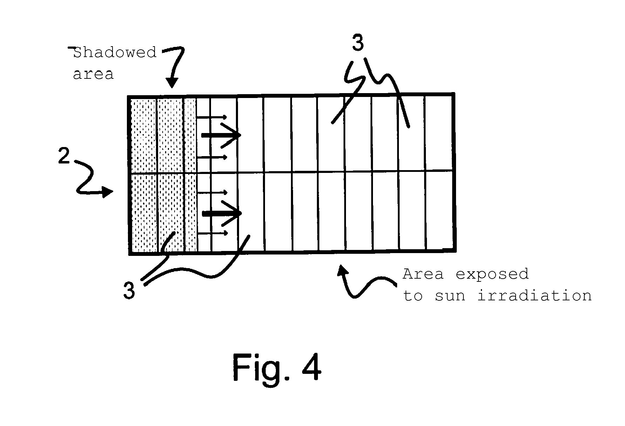

- figure 4 shows a photovoltaic park comprising a plurality of photovoltaic panels arranged in two rows, in which one can see an area exposed to the sun, with a direct irradiation, and a shadowed area, which increases in surface as time goes by;

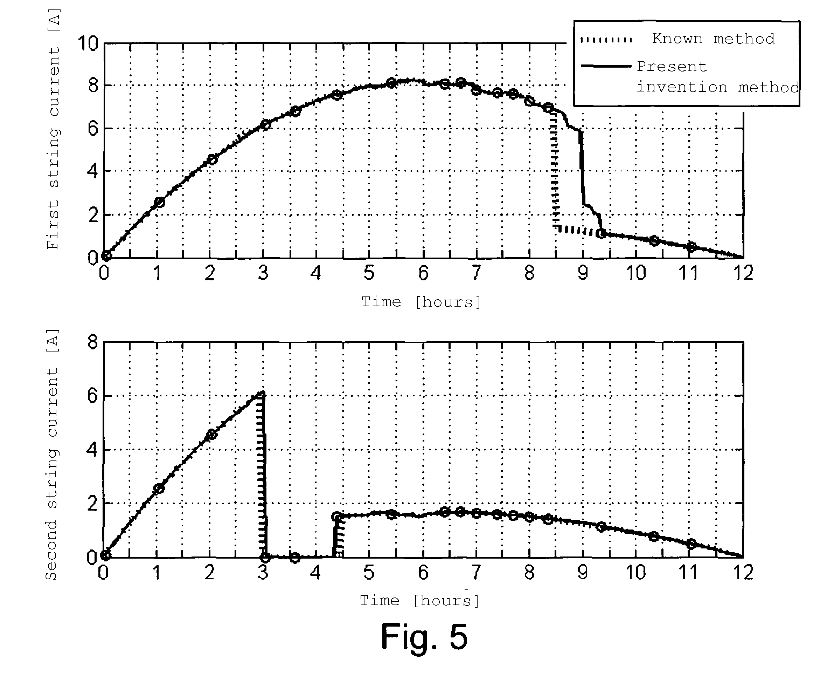

- figure 5 shows a comparison between the curves of the current produced in the daily hours of a day by two strings of a photovoltaic park implementing a method of the prior art and by the same two strings of the same photovoltaic park, or of a substantially similar photovoltaic park, implementing the method according to the present invention, in a condition of partial irradiation of both the rows of panels of figure 4, with the shadowed area increasing in surface as time goes by;

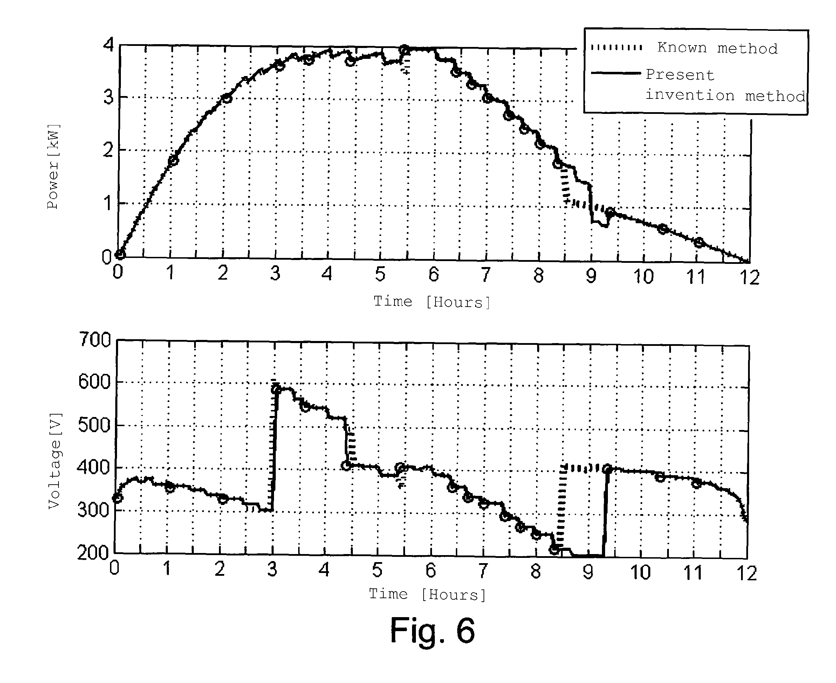

- figure 6 shows a comparison between the curves of the working voltage and the power produced in the daily hours of a day by a photovoltaic park implementing a method of the prior art and by the same photovoltaic park, or by a substantially similar photovoltaic park, implementing the method according to the present invention, in a condition of partial irradiation of both the rows of panels of figure 4, with reference to figure 5;

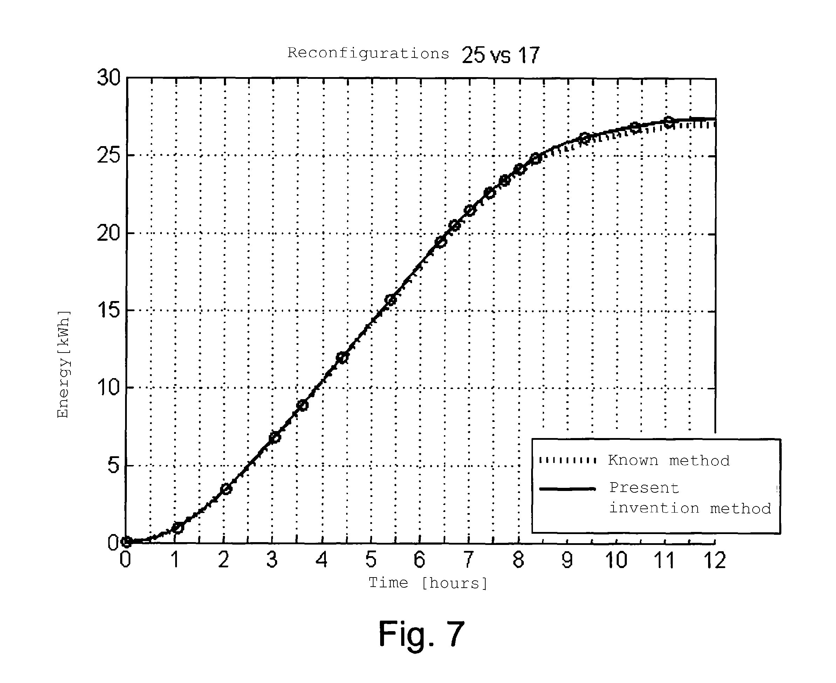

- figure 7 shows a comparison between the curves of the energy produced in the daily hours of a day by a photovoltaic park implementing a method of the prior art and by the same photovoltaic park, or by a substantially similar photovoltaic park, implementing the method according to the present invention, in a condition of partial irradiation of both the rows of panels of figure 4, with reference to figures 5 and 6;

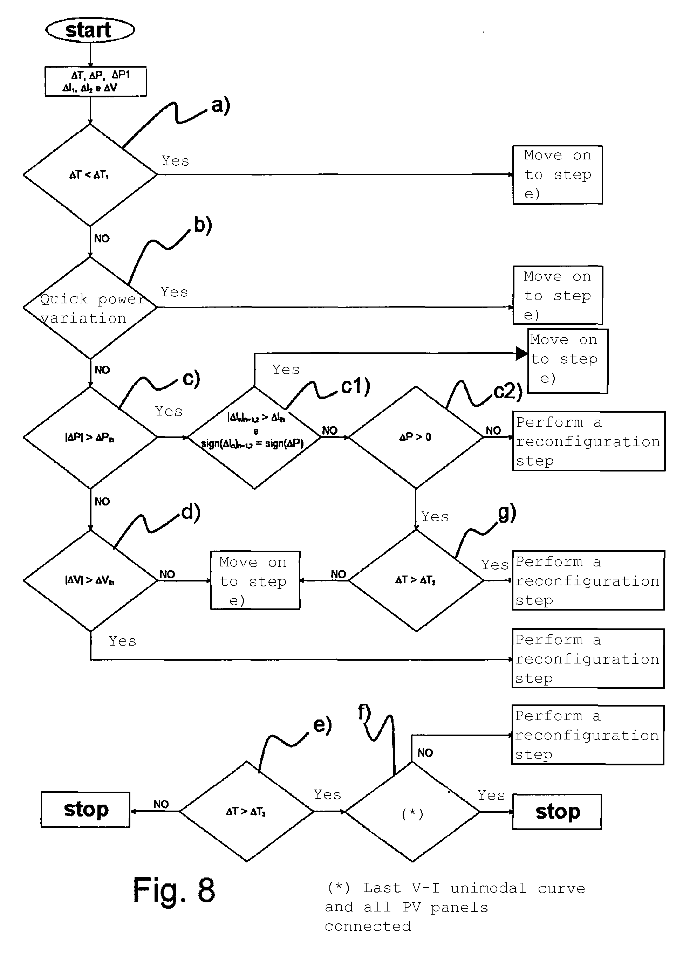

- figure 8 shows a flowchart representing a preferred embodiment of the method according to the present invention.

With reference to the figures mentioned above, the method to evaluate the need to perform a reconfiguration step to reconfigure at least two photovoltaic panels 3, which are electrically connected to one another and belong to a photovoltaic park 2, comprises the following steps:
- checking whether the time "ΔT" elapsed since the previous reconfiguration step is shorter than a first predetermined time value "ΔT1";
- checking whether a power variation that as absolute value is greater than or equal to a first threshold power variation "ΔPₜₕ₁" is detected, in a module, within a first known threshold time amount "ΔTₜₕ";
- checking whether a string current variation "ΔI" and a power variation "ΔP" are concordant in the variation.

If at least one of these steps is checked, it is unnecessary to perform a new reconfiguration step to reconfigure panels 3. After these steps, one can move on to checking the conditions, described below, concerning the possibility to activate a precautionary reconfiguration step.

In particular, one can move on to checks to evaluate the possibility to activate a precautionary reconfiguration step, even if the steps described above are checked. In the description below this feature will be described more in detail.

The method according to the present invention repeats the checking steps, according to predetermined rules and time schedules that are not discussed in detail, in an iterative manner.

Hereinafter, for greater clarity, the aforesaid steps will be referred to as "NO reconfiguration checking steps".

Preferably, these steps are performed in the sequence described above.

In equivalent embodiments, the order in which the steps are performed is different, but it is anyway suited to obtain the same technical effects.

For the purpose of the present invention, the term "checked step" means that, after the execution of this step, the result of the check is affirmative, in particular defines a "YES" path.

The aforesaid steps are the crucial step of the method according to the present invention.

The step of checking whether the time "ΔT" elapsed since the previous reconfiguration step is shorter than a first predetermined time value "ΔT1" is implemented so as to avoid repeated reconfigurations at time intervals that are too short, also taking into account the modes of operation of the maximum power point tracking (MPPT) devices. The first time value "ΔT1" is a value that can be determined by a person skilled in the art, for example based on the characteristic times of MPPT devices, on the time needed by the reconfiguration system to calculate a new reconfiguration, on the actuation thereof, as well as on the energy dissipated by the reconfiguration system itself. By means of the step of checking whether a power variation that as absolute value is greater than or equal to a first threshold power variation "ΔPₜₕ₁" is detected, , within a first known threshold time amount "ΔTₜₕ" one checks the speed at which this variation has occurred. As a matter of fact, if this variation has occurred very rapidly, it probably was caused by an isolated event, namely a non-repetitive one. This phenomenon can be associated, for example, with the movement of the clouds, which can cause shadow areas to change very quickly. In other words, if, within a time interval amounting to "ΔTₜₕ", the power produced by the photovoltaic park varies as absolute value by a quantity greater than "ΔPₜₕ₁", the cause of this variation probably is an isolated event and, for this reason, it is not necessary to carry out a reconfiguration.

Said first threshold power variation "ΔPₜₕ₁" preferably is a power value defined as a function of the electric features of the photovoltaic park implementing the method according to the present invention and/or determined starting from the awareness of the typical solar irradiance variation, which, according to regulations, is equal to 100W/m^2/s. Furthermore, said first threshold time amount "ΔTₜₕ" is an amount of time that is preferably defined based on the same considerations used for "ΔPₜₕ₁" and preferably ranges from 30 seconds to 5 minutes, more preferably 1 minute.

The step of checking whether a string current variation "ΔI" and a power variation "ΔP" are concordant in the variation controls whether the variation of the power produced in the photovoltaic park and the current variations in all the strings are concordant, namely whether they all increase or decrease relative to the data obtained after the previous reconfiguration step. Indeed, if the variations are concordant, one can assumed that they are all caused exclusively by a variation of exposition to the sun of all photovoltaic panels 3, namely of entire photovoltaic park 2.

This step is carried out by comparing the power variation "ΔP", for example measured by the inverter, relative to a second threshold power variation "ΔPₜₕ₂" and current variation "ΔI", in each string, relative to a first threshold power variation "ΔIₜₕ". The value of this first threshold power variation "ΔIₜₕ" can also be different for each string, or different for at least one string, of the photovoltaic park.

Said second threshold power variation "ΔPₜₕ₂" preferably is a power value defined as a function of the electric features of the single string of the photovoltaic park implementing the method according to the present invention and/or determined starting from the value of the typical solar irradiance variation, which is indicated by regulations.

Power variation "ΔP" is calculated by comparing - and in particular by subtracting - the power measured, for example, at the input terminals of the inverter in a given time instant with the power measured after the last reconfiguration step.

Current variation "ΔI" is calculated by comparing - and in particular by subtracting - the current measured in each string in a given time instant with the current measured in the same string after the last reconfiguration step.

For the purpose of the present invention, the term "checked step" means that, after the execution of this step, the result is affirmative.

For the purpose of the present invention, the term "parameter measured after the last reconfiguration step" indicates a value assumed by the parameter after the last reconfiguration step, when the algorithm implemented by a MPPT device has caused the photovoltaic park to work close to a maximum power point.

The method according to the present invention preferably comprises the following further steps:
- checking whether a power variation "ΔP" is smaller than 0W and whether the modulus of the same power variation "ΔP" is greater than a third threshold power variation value "ΔPₜₕ₃";
- checking whether a power variation "ΔP" is greater than 0W and whether the modulus of the same power variation "ΔP" is greater than a fourth threshold power variation value "ΔPₜₕ₄" and whether the time "ΔT" elapsed since the previous reconfiguration step is greater than a second predetermined time value "ΔT2";
- checking whether the module of a power variation "ΔP" is smaller than a fifth threshold power variation value "ΔPₜₕ₅" and whether the modulus of a voltage variation "ΔV" is greater than a known threshold voltage variation value "ΔVₜₕ".

If none of the "NO reconfiguration checking steps" are checked and at least one of these further steps is checked, it is necessary to perform a new reconfiguration step to reconfigure panels 3.

Hereinafter, for greater clarity, the aforesaid steps will be referred to as "reconfiguration checking steps".

The three steps mentioned above are part of a preferred embodiment of the method according to the present invention.

These three steps are preferably carried out in sequence and in the order indicated above. The aforesaid "reconfiguration checking steps" are preferably performed after having carried out the aforesaid "NO reconfiguration checking steps". More preferably, these steps are performed if the previous "NO reconfiguration checking steps" turn out to be not checked.

Equivalent embodiments involve a step sequence different from the one suggested above, though obtaining the same technical effect.

The step of checking whether a power variation "ΔP" is smaller than 0W and whether the modulus of the same power variation "ΔP" is greater than a third threshold power variation value "ΔPₜₕ₃" controls whether the power decrease is due to a shadow recurring in its movement above photovoltaic park 2. In case of an affirmative answer, since we are dealing with a persistent shadow, the connection among photovoltaic panels 3 should be reconfigured.

The step of checking whether a power variation "ΔP" is greater than 0W and whether the modulus of the same power variation "ΔP" is greater than a fourth threshold power variation value "ΔPₜₕ₄" and whether time "ΔT" elapsed since the previous reconfiguration step is greater than a second predetermined time value "ΔT2" controls whether the power variation can be due to a recurrent shadow, as in the previous case. In case of an affirmative answer, if the power increase took place in time "ΔT" elapsed since the last reconfiguration step that is greater than the predetermined time value "ΔT2", the connection among photovoltaic panels 3 should be reconfigured.

Preferably, said second time value "ΔT2" is chosen as a function of the environmental conditions of the site in which the photovoltaic system is located. Said time value "ΔT2" approximately ranges from 30 minutes to 1 hour, for example amounts to 45 minutes.

The step of checking whether the modulus of a power variation "ΔP" is smaller than a fifth threshold power variation value "ΔPₜₕ₅" and whether the module of a voltage variation "ΔV" is greater than a known threshold voltage variation value "ΔVₜₕ" controls whether there is a sensible variation in the working voltage without a significant variation of the power produced. This phenomenon could mean that there is a recurring shadow on photovoltaic park 2 and that a new reconfiguration step could allow operators to determine a configuration of the connection among photovoltaic panels 3 that generates more power as an output.

Voltage variation "ΔV" is calculated by comparing - and in particular by subtracting - the voltage measured, for example, at the ends of at least one string in a given time instant with the voltage measured after the last reconfiguration step.

In the method according to the present invention, in case time "ΔT" elapsed since the previous reconfiguration step is greater than a third predetermined time value "ΔT3", the following optional step is performed:
- checking whether, during the last reconfiguration step, the voltage-power curves detected for entire photovoltaic park 2 and for single panels 3 were unimodal and whether no panels 3 were disconnected from photovoltaic park 2.

If this step is checked, it is unnecessary to perform a new reconfiguration step to reconfigure panels 3, otherwise a precautionary reconfiguration step must be preferably performed.

Hereinafter, for greater clarity, the aforesaid step will be referred to as "precautionary checking step".

Said precautionary checking step is suited to allow operators to perform reconfiguration steps that might not be necessary but are carried out to take precautions against possible shadow variations that can hardly be detected remaining in a given configuration of the photovoltaic park for a long time.

This precautionary checking step is preferably checked irrespective of the previous steps. In particular, if the precautionary checking step is not checked, the reconfiguration step is performed regardless of the result of a previous step, for example of the "NO reconfiguration checking steps" and/or of the "reconfiguration checking steps", which established that a reconfiguration was unnecessary.

The condition of unimodal curves voltage-power both for the photovoltaic park and for each photovoltaic panel, together with the condition according to which all the panels are currently connected to the photovoltaic park, allow operators to establish that the system is able to feel, through the measurement of the string currents, of the working voltage and of power generated by the photovoltaic park, possible variations in the shadows to which one or more panels are subject. If the aforesaid step is checked, one can assume that, in said amount of time "ΔT", which is greater than said third time value "ΔT3", the possible power variations "ΔP" and/or current variations "ΔI" and/or voltage variations "ΔV" detected are really due to the sole variation of the sun irradiation hitting the entire photovoltaic park and not to the presence of shadows that are such as to justify the beginning of a new reconfiguration step. The method according to the present invention performs a further step to check the need for a new reconfiguration step, even when a lot of time has elapsed since the last reconfiguration step, so as to establish whether there have been shadow variations to which the system was not sensitive and, if so, carry out a precautionary reconfiguration.

For the purpose of the present invention, the term "unimodal voltage-power curve" means a voltage-power curve in which there is only one absolute maximum point, without further relative maximum points.

Preferably, said third time value "ΔT3" is an amount of time ranging from 1 to 3 hours, for example 1 hour and 30 minutes.

In general, in the method according to the present invention, prior to the execution of the steps comprised in the method itself, the following parameters are acquired:
- time elapsed "ΔT" since the previous reconfigurations step;
- power variation "ΔP" detected relative to the power value measured after the previous reconfiguration step;
- current variations "ΔI" detected relative to the current values measured after the previous reconfiguration step in each string;
- voltage variation "ΔV" detected relative to the working voltage value measured after said previous reconfiguration step;
- power variations "ΔP1" detected within the last time interval with a duration equal to "ΔTₜₕ".

These parameters are normally acquired by the managing systems of a photovoltaic park 2. For these reasons, in order to be carried out, the method according to the present invention does require specific electronic devices, but it simply uses the electronic devices normally available in a photovoltaic system.

In general, the method according to the present invention is implemented when a variation of at least one of the parameters measured or acquired is detected. The detection of a variation of at least one parameter can be carried out in real time, or in predetermined time instants, for example at 1-minute time intervals.

Any combination of the steps mentioned above is part of the scope of protection of the present invention. Indeed, as a function of the features of the photovoltaic system, of the environmental conditions of the place where the photovoltaic system is located, and/or of the need of the manager of the photovoltaic system, it is possible to implement a combination of the steps that is ideal for photovoltaic park 2 to which the method according to the present invention is to be applied.

Figures 1-3 show explanatory graphs of the current of two strings of a photovoltaic park 2, of the working voltage, of the power and of the energy produced by two photovoltaic parks that are substantially identical and subject to same degree of sun irradiation, in particular a constant and total sun irradiation, wherein, though, one photovoltaic park implements a reconfiguration method of the prior art, which is carried out at constant time intervals, in particular every 30 minutes, whereas the other one implements the method according to the present invention. Figures 1-3 can also refer to the same photovoltaic park, which, in one case, implements a reconfiguration method of the prior art carried out at constant time intervals, in particular every 30 minutes, and, in the other case, implements the method according to the present invention, in the same identical environmental conditions.

In this comparison one can clearly see that the performances of the systems are substantially similar, unlike the number of reconfigurations performed and the energy produced by the two systems; as a matter of fact, in the system implementing the method according to the present invention, the number of reconfigurations is approximately 1/12 relative to the ones performed in the system where the reconfiguration step takes place at constant time intervals, thus resulting in a greater quantity of energy produced by the photovoltaic system implementing the method according to the present invention. In a comparison over twelve hours of sun irradiation of the solar parks, with a sun irradiation peak equal to 1kW/m², the number of reconfiguration steps of a photovoltaic park implementing a method of the prior art, in which the reconfiguration step takes place at regular time intervals of 30 minutes, amounts to twenty five reconfiguration steps; whereas, in a photovoltaic park implementing the method according to the present invention, the number of reconfiguration steps only amounts to two.

In the appended figures 1-3 and 5-7, the execution of a reconfiguration step according to the method of the present invention is represented with circles along the respective curves, so as to allow readers to identify the instant in which a reconfiguration step takes place as well as the total number of reconfiguration steps carried out.

The greatest differences are shown in figures 5-7, where, like in the previous case, there is a comparison between two photovoltaic parks: a photovoltaic park implementing the regular-interval reconfiguration method and a photovoltaic park implementing the method according to the present invention. Figures 5-7 can also refer to the same photovoltaic park, which, in one case, implements a reconfiguration method of the prior art carried out at constant time intervals, in particular every 30 minutes, and, in the other case, implements the method according to the present invention, in the same identical environmental conditions.

Figure 4 shows, by way of example, a photovoltaic park 2 where there is a showed area that increases as time goes by relative to the area subject to a direct sun irradiation. Figures 5-7 show, by way of example, the development of the parameters of a photovoltaic system comprising the photovoltaic park according to figure 4.

This comparison points out that the method according to the present invention performs a smaller number of reconfigurations, carrying out these reconfigurations only if necessary and as a function of the variation of the parameters that are measured and/or detected.

As one can assume from the figures, in this case, as well, the production of energy is greater in the photovoltaic park where the method according to the present invention is implemented.

In a comparison over 12 hours of sun irradiation of the photovoltaic parks, with a sun irradiation peak equal to 1kW/m², the number of reconfiguration steps of a photovoltaic park implementing a method of the prior art, in which the reconfiguration step takes place at regular time intervals of 30 minutes, amounts to twenty five reconfiguration steps; whereas, in a photovoltaic park implementing the method according to the present invention, the number of reconfiguration steps amounts to seventeen.

Moving on to the implementation details of the method, the preferred sequence of steps is the one shown in the flowchart of figure 8. Without loosing anything in terms of generality, in the aforesaid flowchart said second, third, fourth and fifth threshold power variations ("ΔPₜₕ₂", "ΔPₜₕ₃", "ΔPₜₕ₄", "ΔPₜₕ₅") are supposed to be equal and are all indicated with quantity "ΔPₜₕ".

The flowchart shows the method according to the present invention in a preferred sequence of steps, for an explanatory but non-limiting purpose.

The method preferably comprises the following subsequent steps:
a) checking whether time "ΔT" elapsed since the previous reconfiguration step is shorter than a first predetermined time value "ΔT1"; if, after the test, the "YES" path is chosen, move on to step e), if the "NO" path is chosen, move on to step b);
b) checking whether a quick power variation is detected within a first known threshold time amount "ΔTₜₕ"; if, after the test, the "YES" path is chosen, move on to step e), if the "NO" path is chosen, move on to step c);
c) checking whether the modulus of a power variation "ΔP" is greater than a threshold power variation value "ΔPₜₕ"; if, after the test, the "YES" path is chosen, move on to step c1) of the method, if the "NO" path is chosen, move on to step d);
   c1) checking whether a current variation ΔI1, ΔI2 and a power variation "ΔP" are concordant in the variation and whether the modulus of a current variation ΔI1, ΔI2 is greater than a threshold power variation value "ΔPₜₕ"; if, after the test, the "YES" path is chosen, move on to step e), if the "NO" path is chosen, move on to step c2);
   c2) checking whether a power variation "ΔP" is greater than 0W; if, after the test, the "NO" path is chosen, carry out a reconfiguration step, if the "YES" path is chosen, move on to step g);
d) checking whether the modulus of a voltage variation "ΔV" is greater than a known threshold power variation value "ΔVₜₕ"; if, after the test, the "YES" path is chosen, carry out a reconfiguration step, if the "NO" path is chosen, move on to step e);
e) checking whether time "ΔT" elapsed since the previous reconfiguration step is greater than a third predetermined time value "ΔT3"; if, after the test, the "NO" path is chosen, stop the method, if the "YES" path is chosen, move on to step f);
f) checking whether, during the last reconfiguration step, the voltage-power curves detected for photovoltaic park 2 and the single photovoltaic panels 3 were unimodal and whether no panel 3 were disconnected from photovoltaic park 2; if, after the test, the "YES" path is chosen, stop the method, if the "NO" path is chosen, carry out a reconfiguration step;
g) checking whether time "ΔT" elapsed since the previous reconfiguration step is greater than a second predetermined time value "ΔT2"; if, after the test, the "YES" path is chosen, carry out a reconfiguration step, if the "NO" path is chosen, move on to step e).

The single steps shown in the step sequence of the method shown in the flowchart of figure 8 are described above and/or can be assumed from the steps described above.

The method according to the present invention repeats the checking steps, according to predetermined rules and time schedules that are not discussed in detail, in an iterative manner.

Unlike many methods of the prior art, the method according to the present invention, using the parameters that are normally detected to manage a photovoltaic park 2, allows operators to determine when to reconfigure the connection among panels 3, without the need to stop the production of energy.

Furthermore, the method according to the present invention prevents operators from performing unnecessary reconfiguration steps. By eliminating all unnecessary reconfiguration steps, one allows the system to keep producing energy.

Furthermore, the algorithm to determine a reconfiguration of panels 3 is knowingly executed during the reconfiguration step itself and, thus, requires a significant amount of time to determine the configuration of panels 3. The time needed to determine a configuration, during which the system does not produce energy, multiplied by the number of reconfiguration steps carried out during the panel irradiation period, gives an idea of the amount of time for which the photovoltaic system remains inactive due to a reconfiguration method. By reducing the number of reconfiguration steps to the merely essential ones, the method according to the present invention reduces the amount of time for which a photovoltaic system remains inactive due to the reconfiguration steps.

The method according to the present invention only uses the voltage and power generated by photovoltaic park 2 as well as the currents of the single photovoltaic strings to determine the need to perform a new reconfiguration step. This data is known and can easily be acquired without the need to use further sensors that are specific for these measurements.

The method according to the present invention is especially designed to be implemented by means of a computer program.

The computer program according to the present invention is designed to be stored in a memory medium, preferably a non-volatile one, and can be executed by a computer.

Said computer could be the same processor or microcontroller comprised in the sampling system and/or in the control system of the system and/or in the reconfiguration system used to reconfigure panels 3 comprised in a photovoltaic system.

The computer program according to the present invention is configured to implement the method described above.

The method according to the present invention basically comprises three types of checking steps, in particular a first type of checking steps or "NO reconfiguration checking steps", in which one checks whether the reconfiguration step can be avoided, a second type of checking steps or "reconfiguration checking steps", in which one checks whether it is necessary to perform a reconfiguration step, and a third type of reconfiguration steps or "precautionary checking steps", in which one checks whether a precautionary reconfiguration of the panels of the photovoltaic park should be carried out.

The method according to the present invention checks, with priority, the first type of steps, namely whether a new reconfiguration step to reconfigure the connection among panels 3 can be avoided.

The reconfiguration will take place only in two cases:
a) if none of the steps of the first type are checked and at least one step of the second type is checked, namely if, after the checking steps of the second type, the result is that a new reconfiguration step to reconfigure panels 3 is necessary in order to obtain the maximum power of photovoltaic park 2
b) if the step of the third type is checked, irrespective of the checking of the steps of the first type and/or of the lack of checking of the steps of the second type.

## Claims

1. Method to evaluate the need to perform a reconfiguration step to reconfigure at least two solar panels (3), which are electrically connected to one another and are comprised in a solar park (2);
the method is **characterized in that** it comprises the following steps:
• checking whether the time (ΔT) elapsed since the previous reconfiguration step is shorter than a first predetermined time value (ΔT1);
• checking whether a power variation that is greater than or equal to a first threshold power variation (ΔPₜₕ₁) is detected, in a module, within a first known threshold time amount (ΔTₜₕ);
• checking whether a string current variation (ΔI) and a power variation (ΔP) are concordant in the variation;
if at least one of these steps is checked, it is unnecessary to perform a new reconfiguration step to reconfigure the panels (3).

2. Method according to claim 1, wherein the following steps are provided:
• checking whether a power variation (ΔP) is smaller than 0W and whether the module of the same power variation (ΔP) is greater than a third threshold power variation value (ΔPₜₕ₃);
• checking whether a power variation (ΔP) is greater than 0W and whether the module of the same power variation (ΔP) is greater than a fourth threshold power variation value (ΔPₜₕ₄) and whether the time (ΔT) elapsed since the previous reconfiguration step is greater than a second predetermined time value (ΔT2);
• checking whether the module of a power variation (ΔP) is smaller than a fifth threshold power variation value (ΔPₜₕ₅) and whether the module of a voltage variation (ΔV) is greater than a known threshold voltage variation value (ΔVₜₕ);
if at least one of these steps is checked, it is necessary to perform a new reconfiguration step to reconfigure the panels (3).

3. Method according to claim 2, wherein:
- the checking steps according to claim 2 are performed after the checking steps of claim 1, only if none of the steps of claim 1 are checked.

4. Method according to any of the previous claims, wherein, if the time (ΔT) elapsed since the previous reconfiguration step is greater than a third predetermined time value (ΔT3), the following steps are performed:
• checking whether, during the last reconfiguration step, the voltage-power curves detected for the entire solar park (2) and for the single panels (3) were unimodal and whether no panels (3) were disconnected from the solar park (2);
if this step is checked, it is unnecessary to perform a new reconfiguration step to reconfigure the panels (3), otherwise a reconfiguration step must be performed.

5. Method according to claim 4, wherein the reconfiguration step, after a failure to check the previous step, is performed irrespective of the result of any previous step that established the lack of necessity of a reconfiguration.

6. Method according to claim 1, wherein, before performing the steps of the method, the following parameters are acquired:
• time elapsed (ΔT) since a previous reconfigurations step;
• power variation (ΔP) detected relative to a power value measured after said previous reconfiguration step;
• current variations (ΔI) detected relative to current values measured after said previous reconfiguration step in each string;
• voltage variation (ΔV) detected relative to a working voltage value measured after said previous reconfiguration step;
• power variations (ΔP1) detected within the last time interval with a duration equal to (ΔTₜₕ).

7. Method according to any of the previous claims, wherein the method is implemented when a variation of at least one of the parameters measured or acquired is detected.

8. Method according to claim 1, wherein the step of checking whether a string current variation (ΔI) and a power variation (ΔP) are concordant in the variation is performed by comparing the power variation (ΔP), relative to a second threshold power variation (ΔPₜₕ₂) and the current variations (ΔI), in each string, relative to a first threshold current variation (ΔIₜₕ).

9. A Method according to claim 8, wherein the value of the first threshold current variation (ΔIₜₕ) is different for at least one string of the solar park (2).

10. Method according to claim 8, wherein the value of the first threshold current variation (ΔIₜₕ) is equal for all the strings of the solar park (2).

11. A Method according to claim 2, wherein the step of checking whether the module of a power variation (ΔP) is smaller than a fifth threshold power variation value (ΔPₜₕ₅) and whether the module of a voltage variation (ΔV) is greater than a known threshold voltage variation value (ΔVₜₕ) controls the maximum power points of the solar park (2).

12. Computer program, which is adapted to be stored in a memory medium, preferably a non-volatile one, and can be executed by a computer;
said program is configured to implement the method according to any of the method claims from 1 to 11.
